# EUROPEAN PATENT APPLICATION

(11) **EP 3 527 861 A1**
(43) Date of publication of application: **21.08.2019**
(21) Application number: 19157500.0
(22) Date of filing: 15.02.2019
(51) Int. Cl.: F16K 1/00, F25B 13/00, F25B 41/04, F16K 11/065, F16K 11/074

(54) **SLIDE VALVE**

(30) Priority: 15.02.2018 JP 2018024770
(71) Applicant: Fujikoki Corporation, Tokyo 158-0082 (JP)
(72) Inventor: Kibune, Hitoshi, Tokyo, 1580082 (JP); Morita, Noriyuki, Tokyo, 1580082 (JP)
(74) Representative: Schön, Christoph

(57) **Abstract**

To provide a slide valve capable of suppressing pressure loss of a fluid occurred by misalignment between a port of a valve seat and a wall surface of a flow channel in a valve element.

The slide valve 1 comprises a valve seat 20 having a valve seat surface 21 provided with a plurality of ports, and a valve element 30 slidably provided on the valve seat surface 21. The valve element 30 configures a U-shaped flow channel for allowing two ports, E port 23 and S port 22 of the plurality of ports to communicate each other according to a stop position. The valve element 30 is arranged, at the stop position, a distance D1 on the valve seat surface 21 from E port 23 at the upstream side to the most peripheral part 23a of a wall surface 32 of the flow channel 31 is larger than a distance D2 on the valve seat surface 21 from S port 22 at the downstream side to the most peripheral part 32a of the wall surface 32 of the flow channel 31.

## Description

### BACKGROUND OF THE INVENTION

### Field of the Invention

The present invention relates to a slide valve for switching a flow channel by sliding a valve element on a valve seat surface.

### Background Art

The slide valve is, for example, used for switching a refrigerant channel in a refrigeration cycle system for use in an air conditioner.

Patent Literature 1 discloses an example of a conventional slide valve. Such a slide valve comprises a cylinder-shaped valve main body. The valve main body is provided with a first conduit allowed to communicate with an inside thereof. The inside of the valve main body is provided with a valve seat having a valve seat surface at which three ports are opened. There are provided a linear second, third and fourth conduits which are allowed to communicate with the inside of the valve main body through each port at the valve seat surface. The slide valve comprises a valve element slidably disposed on the valve seat surface. The valve element forms a U-shaped flow channel, which allows each conduit to communicate through the ports at the valve seat surface.

### CITATION LIST

### PATENT LITERATURE

[Patent Literature 1] Japanese Unexamined Patent Application Publication No. 2013-227989

### SUMMARY OF INVENTION

### TECHNICAL PROBLEM

When communication of each conduit is made, a fluid flowing along a wall surface can be made to flow by arranging a valve element so that the wall surface of a flow channel and an inner peripheral surface of a port of the downstream side connect without level difference. However, the flow channel is formed to be spread outwardly so that the valve element prepared with the smallest size within tolerance does not cover the port. Therefore, when the wall surface of the flow channel is largely misaligned from the inner peripheral surface outwardly, large level difference is made between the wall surface of the flow channel and the inner peripheral surface of the port in the downstream side, and a valve seat surface is exposed in the flow channel. The fluid flowing along a wall surface impinges on the valve seat surface and largely enters the mainstream of the fluid, and therefore turbulence of the mainstream is made and pressure loss is occurred.

The present invention has been made in view of the above-described problems, and an object of the present invention is to provide a slide valve which can suppress pressure loss of a fluid occurred by misalignment between a port of a valve seat and a wall surface of a flow channel in a valve element.

In order to solve the above-described problems, a slide valve according to the present invention comprises a valve seat having a valve seat surface provided with a plurality of ports, and a valve element slidably provided on the valve seat surface, and the valve element configures a U-shaped flow channel for allowing two ports of the plurality of ports to communicate each other according to a stop position, wherein, at the stop position, a distance on the valve seat surface from a port at the upstream side of the two ports to the most peripheral part of a wall surface of the flow channel is larger than a distance on the valve seat surface from the port at the downstream side of the two ports to the most peripheral part of the wall surface of the flow channel.

According to the present invention, it is preferable that the valve element is arranged so that a distance on the valve seat surface from the port at the downstream side of the two ports to the most peripheral part of the wall surface of the flow channel becomes zero at the stop position.

The flow channel configured by the valve element is curved so that two ports of a plurality of ports on a valve seat surface are allowed to communicate. When the most peripheral part of the wall surface of the flow channel is largely misaligned from a port at the downstream side outwardly, the fluid flowing along the wall surface impinges on the valve seat surface and turbulence of the mainstream is made. On the other hand, when the most peripheral part of the wall surface of the flow channel is largely misaligned from a port at the upstream side outwardly, a width of the flow channel of the fluid passing through the port of the upstream side is spread outwardly, the turbulence is also made, however influence on the mainstream is small. According to the present invention, the valve element is arranged so that, at the stop position, a distance on the valve seat surface from a port at the upstream side of the two ports communicated each other to the most peripheral part of a wall surface of the flow channel is larger than a distance on the valve seat surface from the port at the downstream side of the two ports to the most peripheral part of the wall surface of the flow channel. Thus configured, when the most peripheral part of the wall surface of the flow channel is largely misaligned outwardly, misalignment between the most peripheral part of the wall surface of the flow channel and the port at the downstream side becomes small in size. Therefore, in the vicinity of the port at the downstream side, suppression can be made of the turbulence of the mainstream, which is caused by the fluid flowing along the wall surface of the flow channel impinging on the valve seat surface. Pressure loss of the fluid can be suppressed effectively.

### BRIEF DESCRIPTION OF THE DRAWINGS

Fig. 1 illustrates a slide valve according to the first embodiment of the present invention;
Fig. 2 is an enlarged cross sectional view of a valve element area of the slide valve in Fig. 1;
Fig. 3 is an enlarged view of a valve seat surface of the slide valve in Fig. 1;
Fig. 4 schematically illustrates a flow of a fluid in the slide valve in Fig. 1;
Fig. 5 schematically illustrates a flow of a fluid in a conventional slide valve;
Fig. 6 is a perspective view of the slide valve according to the second embodiment of the present invention;
Fig. 7 is a vertical cross sectional view of the slide valve in Fig. 6;
Fig. 8 is a cross sectional view along a line A-A in Fig. 7; and
Fig. 9 is an enlarged cross sectional view along a line B-B in Fig. 8.

### DETAILED DESCRIPTION OF PREFERRED EMBODIMENT

### (First Embodiment)

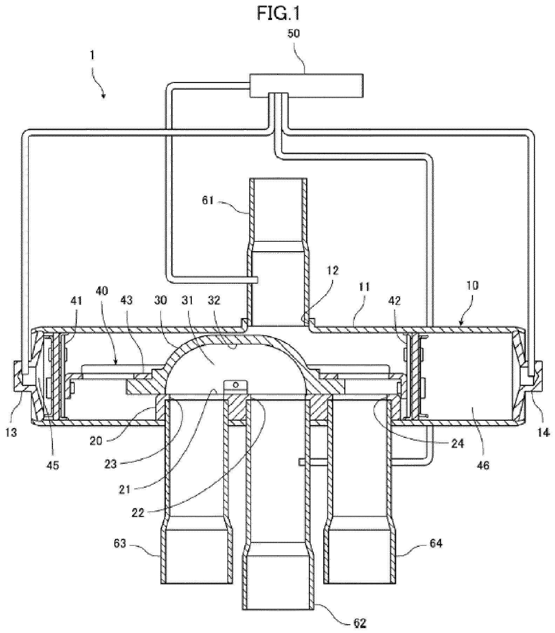

Hereinafter, a description will be made of a slide valve in accordance with the first embodiment of the present invention with reference to the Figs. 1 to 5. The slide valve of the present embodiment is, as one example, used for switching a refrigerant channel in a refrigeration cycle system for use in an air conditioner. Such slide valve is used not only for switching the refrigerant channel, but also for switching a flow channel of various kinds of fluids. The second embodiment is also the same.

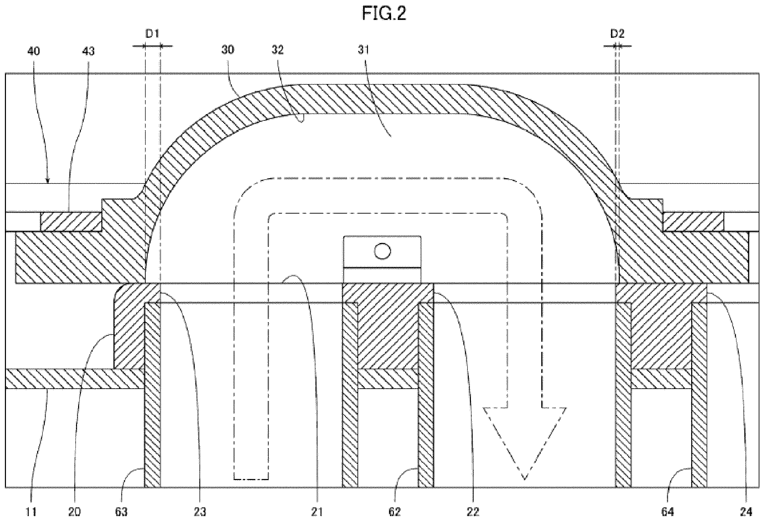

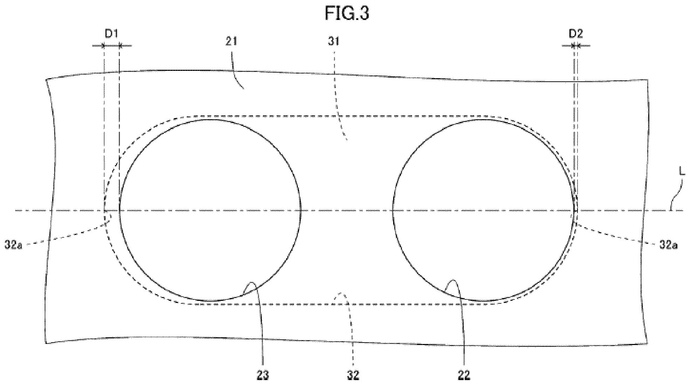

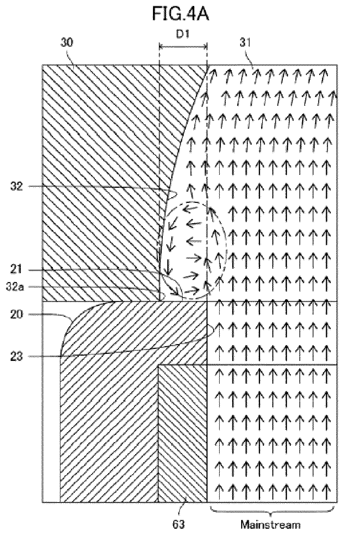

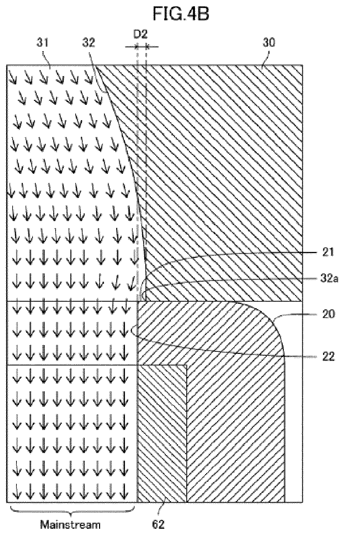

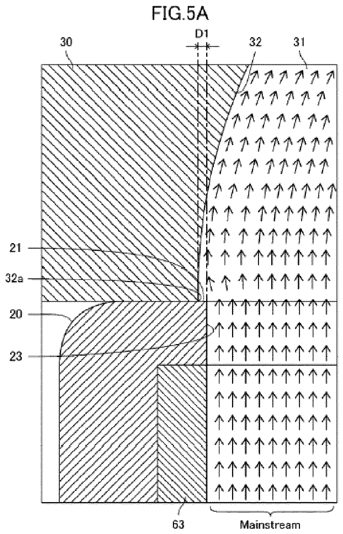

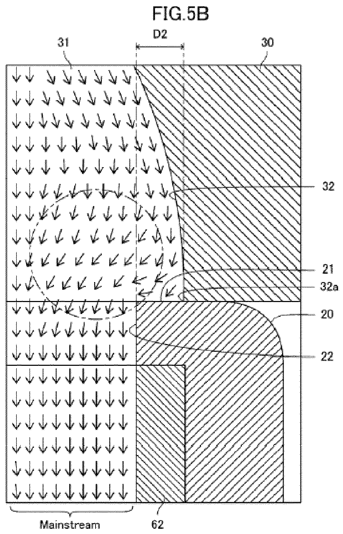

Fig. 1 illustrates the slide valve according to the first embodiment of the present invention, and a part thereof is shown in a cross sectional view. Fig. 2 is an enlarged cross sectional view of a valve element area of the slide valve in Fig. 1. In Fig. 2, an arrow indicated with chain line schematically shows a flowing direction of a fluid (refrigerant). Fig. 3 is an enlarged view of a valve seat surface of the slide valve in Fig. 1. In Fig. 3, a line L passes the center of each port. Fig. 4 schematically illustrates a flow of a fluid in the slide valve in Fig. 1. Fig. 4A shows a port area at the upstream side, Fig. 4B shows a port area at the downstream side. Fig. 5 schematically illustrates a flow of a fluid in a conventional slide valve. Fig. 5A shows a port area at the upstream side, and Fig. 5B shows a port area at the downstream side. In Figs. 4 and 5, an arrow indicated with solid line schematically shows a flow of the fluid. In the description of the present embodiments, terms of "upper" and "lower" correspond to an upper direction and downward direction in Figs. 1, 2,4 and 5.

The slide valve 1 according to the present embodiment is a four-way switching valve linearly sliding the valve element. As shown in Figs. 1 to 3, the slide valve 1 comprises a valve main body 10, a valve seat 20, a valve element 30, a piston section 40 and a pilot section 50.

The valve main body 10 has a cylindrical shape. A wall member 11 of the valve main body 1 has an opening 12. A first conduit 61 is fit in the opening 12, and the first conduit 61 and an inside of the valve main body 1 are allowed to communicate. The first conduit 61 is connected to a discharge portion of a compressor not depicted, and a high-temperature and high-pressure refrigerant flows.

The valve seat 20 is arranged the inside of the valve main body 10. The valve seat 20 comprises a valve seat surface 21 facing the opening 12. The valve seat surface 21 has S port 22, E port 23 and C port 24 which are circular openings.

The S port 22, E port 23 and C port 24 are allowed to communicate with a second conduit 62, a third conduit 63 and a fourth conduit 64 penetrating the wall member 11 of the valve main body 10. The second conduit 62 is connected to a suction portion of the compressor not depicted. The third conduit 63 is connected to a heat exchanger not depicted. The fourth conduit 64 is connected to the heat exchanger not depicted.

The valve element 30 has a dome shape and is provided on the valve seat surface 21 so as to slidably move in horizontal direction of Fig. 1.

An inner wall surface 32 of the valve element 30 and the valve seat surface 21 configure a U-shaped flow channel 31. The flow channel 31 has a cross section perpendicular to the flowing direction having an almost semicircular shape or an almost semi-elliptic shape over the entire flow channel. Configuration may be made by providing a tubular flow channel inside of the valve element 30 so that the flow channel is formed by only the valve element 30. The inner wall surface 32 of the valve element 30 is a wall surface 32 of the flow channel 31.

The valve element 30 comprises a first stop position (for example, a stop position during cooling operation) as shown in Figs. 1 to 4, and a second stop position not depicted (for example, a stop position during heating operation). The valve element 30 is slided on the valve seat surface 21 and positioned at the first stop position and the second stop position. The flow channel 31 allows two ports of a plurality of ports opening at the valve seat surface 21 to communicate according to the stop position.

When the valve element 30 is at the first stop position, the flow channel 31 allows two ports of E port 23 and S port 22 to communicate. When the valve element 30 is at the second stop position, the flow channel 31 allows two ports of C port 24 and S port 22 to communicate.

A piston section 40 comprises a first piston 41, a second piston 42 and a connecting member 43 for connecting the same. The first piston 41 is disposed between the valve element 30 and an end cover 13 provided at an end portion of the valve main body 10 (left end portion of Fig. 1), and forms a working chamber 45 between the end cover 13. The second piston 42 is disposed between the valve element 30 and an end cover 14 provided at another end portion of the valve main body 10 (right end portion of Fig. 1), and forms a working chamber 46 between the end cover 14. The connecting member 43 is connected to the valve element 30 so that the valve element 30 moves together.

The pilot section 50 is configured to switch connections to the working chamber 45, the working chamber 46, the first conduit 61 and the second conduit 62, and to control pressure of the refrigerant in the working chamber 45 and the working chamber 46. Thereby, the piston section 40 is moved toward either left or right side by difference of the refrigerant pressures in the working chamber 45 and the working chamber 46. In accordance with movement of the piston section 40, the valve element 30 connected to the connecting member 43 is slided on the valve seat surface 21 and positioned at the first stop position or the second stop position.

When the valve element 30 is at the first stop position, the refrigerant discharged from the discharge portion of the compressor flows into the valve main body 10 from the first conduit 61, passes through an outside of the valve element 30, and flows into the fourth conduit 64 from the C port 24. From the fourth conduit 64, the refrigerant flows in the third conduit 63 through the heat exchanger, passes through in the order of the E port 23, the flow channel 31 and the S port 22, and flows into the second conduit 62. Finally, the refrigerant returns to a suction portion of the compressor.

When the valve element 30 is at the second stop position, the refrigerant discharged from the discharge portion of the compressor flows into the valve main body 10 from the first conduit 61, passes through the outside of the valve element 30, and flows into the third conduit 63 from the E port 23. From the third conduit 63, the refrigerant flows in the fourth conduit 64 through the heat exchanger, passes through in the order of the C port 24, the flow channel 31 and the S port 22, and flows into the second conduit 62. Finally, the refrigerant returns to the suction portion of the compressor.

When the valve element 30 is at the first stop position, a distance D1 on the valve seat surface 21 from the E port 23 at the upstream side to the most peripheral part 32a of a wall surface 32 of the flow channel 31 is larger than a distance D2 on the valve seat surface 21 from the S port 22 at the downstream side to the most peripheral part 32a of the wall surface 32 of the flow channel 31. The most peripheral part 32a of the wall surface 32 of the flow channel 31 is the outermost part of the wall surface 32 of the U-shaped flow channel 31.

Also, when the valve element 30 is at the second position not depicted, a distance D3 on the valve seat surface 21 from the C port 24 at the upstream side to the most peripheral part 32a of a wall surface 32 of the flow channel 31 is larger than a distance D4 on the valve seat surface 21 from the S port 22 at the downstream side to the most peripheral part 32a of the wall surface 32 of the flow channel 31. It is preferable that the Distance D2 and the Distance D4 become zero.

Next, a description will be made of relationship between size relation of the above-described distance D1 and the distance D2 and turbulence of the mainstream with reference to the Figs. 4 and 5.

As shown in Figs. 4A and 4B, when the valve element 30 is arranged at the first stop position so that the distance D1 is larger than the distance D2, misalignment between the E port 23 at the upstream side and the most peripheral part 32a of the wall surface 32 becomes relatively large, and the flow channel 31 is spread outwardly in the vicinity of the E port 23. The turbulence is occurred in the refrigerant passing through the E port 23, however, the flow entering the mainstream of the refrigerant never occurs (an area indicated with chain line in Fig. 4A). Furthermore, the misalignment between the S port 22 at the downstream side and the most peripheral part 32a of the wall surface 32 become relatively small, and the refrigerant can smoothly flow along the wall surface 32. Thereby, pressure loss of the refrigerant can be suppressed.

On the other hand, as shown in Figs. 5A and 5B, when the valve element 30 is arranged at the first stop position so that the distance D1 is smaller than the distance D2, misalignment between the E port 23 at the upstream side and the most peripheral part 32a of the wall surface 32 becomes relatively small, and the refrigerant can smoothly flow from the E port 23 to the flow channel 31. However, the misalignment between the S port 22 at the downstream side and the most peripheral part 32a of the wall surface 32 become relatively large, and the valve seat surface 21 is exposed in the flow channel 31. The refrigerant flowing along the wall surface 32 impinges on the valve seat surface 21 and largely enters the mainstream of the refrigerant, and therefore turbulence of the mainstream is made (an area indicated with chain line in Fig. 5B). Thereby, the pressure loss of the refrigerant is occurred.

As described above, according to the slide valve 1 according to the present embodiment, when the valve element 30 is at the first stop position, a distance D1 on the valve seat surface 21 from the E port 23 at the upstream side of the two ports to communicate each other (namely, E port 23 and S port 22) to the most peripheral part 32a of a wall surface 32 of the flow channel 31 is larger than a distance D2 on the valve seat surface 21 from the S port 22 at the downstream side to the most peripheral part 32a of the wall surface 32 of the flow channel 31. Thus configured, when the most peripheral part 32a of the wall surface 32 of the flow channel 31 is largely misaligned outwardly from the E port 23 at the upstream side, the misalignment between the most peripheral part 32a of the wall surface 32 of the flow channel 31 and the S port 22 of the downstream side becomes small. Therefore, in the vicinity of the S port 22 at the downstream side, suppression of the turbulence of the mainstream can be made, which is caused by the refrigerant flowing along the wall surface of the flow channel impinging on the valve seat surface 21. Pressure loss of the fluid can be suppressed effectively. When the valve element 30 is at the second stop position, the same description can be made for the C port 24 and S port 22, and the distances D3 and D4 regarding the flow channel 31.

### (Second Embodiment)

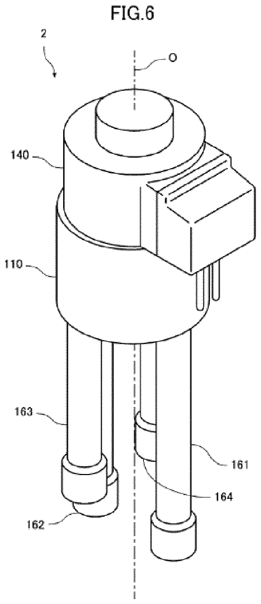

Hereinafter, a description will be made of a slide valve in accordance with the second embodiment of the present invention with reference to the Figs. 6 to 9.

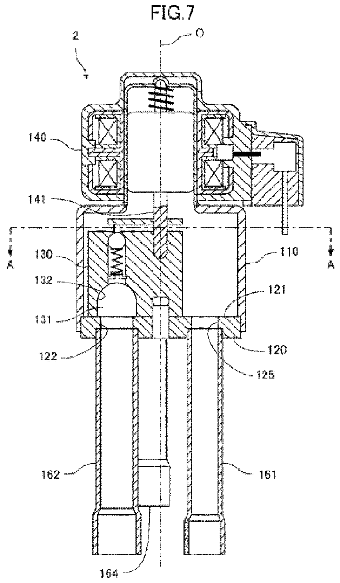

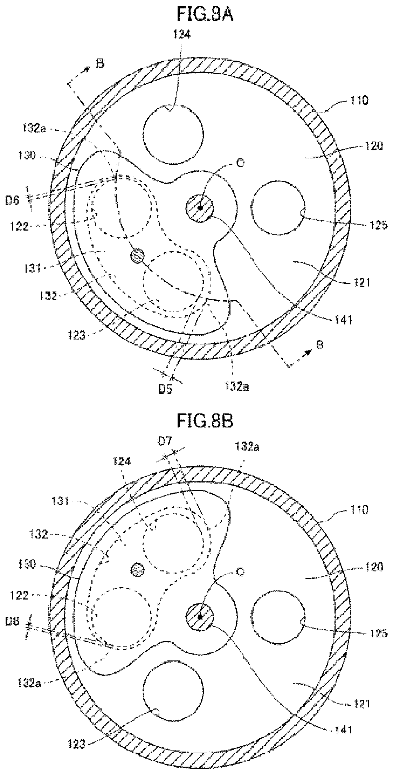

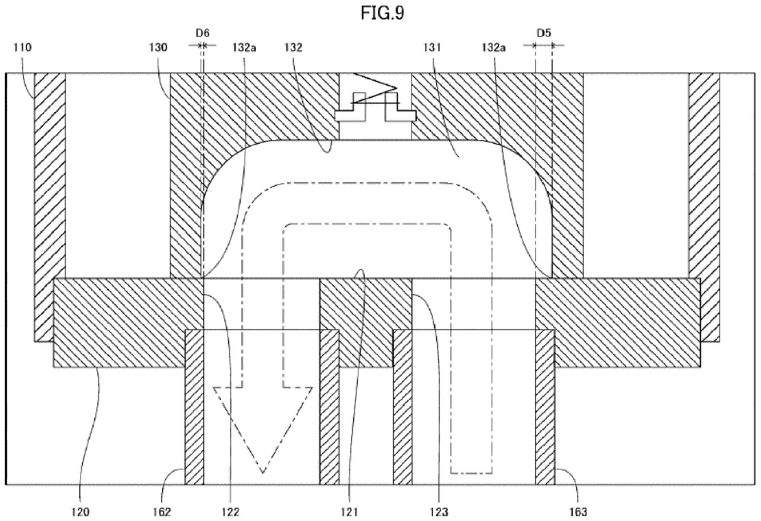

Fig. 6 is a perspective view of the slide valve according to the second embodiment of the present invention. Fig. 7 is a vertical cross sectional view of the slide valve in Fig. 6. Fig. 8 shows a cross sectional view along a line A-A in Fig. 7. Fig. 8A shows a status that the valve element is at the first stop position in the slide valve according to the second embodiment, and the Fig. 8B shows a status that the valve element is at the second stop position in the slide valve according to the second embodiment. Fig. 9 is an enlarged cross sectional view along a line B-B in Fig. 8, and shows the valve element area of the slide valve in Fig. 6. In Fig. 9, an arrow indicated with chain line schematically shows a flowing direction of a fluid (refrigerant). In the description of the present embodiments, terms of "upper" and "lower" correspond to an upper direction and downward direction in Figs. 6, 7 and 9.

The slide valve 2 of the present embodiment is a rotary flow channel switching valve in which the valve element having an approximate planar-view fan-shape is slided in a circular arc direction. As shown in Figs. 6 and 7, the slide valve 2 comprises a valve main body 110, a valve seat 120, a valve element 130 and a valve element driving section 140.

The valve main body 110 has a cylindrical shape. The valve element driving section 140 is provided in a manner of closing an upper end opening of the valve main body 110. A drive shaft 141 of the valve element driving section 140 is installed at a position corresponding to a pivot of the fan-shape valve element 130. The valve seat 120 is provided so as to close a lower end opening of the valve main body 110. The valve seat 120 comprises a valve seat surface 121 facing upward. As shown in Fig. 8, the valve seat surface 121 has D port 125, S port 122, E port 123 and C port 124 which are circular openings.

The D port 125, S port 122, E port 123 and C port 124 are allowed to communicate with a first conduit 161, a second conduit 162, a third conduit 163 and a fourth conduit 164. The first conduit 161 is connected to a discharge portion of a compressor not depicted, and a high-temperature and high-pressure refrigerant flows. The second conduit 162 is connected to a suction portion of the compressor not depicted. The third conduit 163 is connected to a heat exchanger not depicted. The fourth conduit 164 is connected to the heat exchanger not depicted.

The valve element 130 has a column shape with an approximate planar-view fan-shape. A position corresponding to a pivot of the fan-shape is a rotary axis O and the valve element 130 is provided on the valve seat surface 121 so as to slidably move in a circular arc direction.

An inner wall surface 132 of the valve element 130 and the valve seat surface 121 configure a U-shaped flow channel 131 (Fig. 9). The flow channel 131 has a cross section perpendicular to the flowing direction having an almost semicircular shape or an almost semi-elliptic shape over the entire flow channel. Configuration may be made by providing a tubular flow channel inside of the valve element 130 so that the flow channel is formed by only the valve element 130. The inner wall surface 132 of the valve element 130 is a wall surface 132 of the flow channel 131.

The valve element 130 has a first stop position (for example, a stop position during cooling operation) as shown in Fig. 8A and a second stop position (for example, a stop position during heating operation) as shown in Fig. 8B. The valve element 130 is rotated by the valve element driving section 140, slided on the valve seat surface 121 and positioned at the first stop position and the second stop position. The flow channel 131 allows two ports of a plurality of ports opening at the valve seat surface 121 to communicate according to the stop position.

When the valve element 130 is at the first stop position, the flow channel 131 allows two ports of E port 123 and S port 122 to communicate. When the valve element 130 is at the second stop position, the flow channel 131 allows two ports of C port 124 and S port 122 to communicate.

When the valve element 130 is at the first stop position and the second stop position, a flow of the refrigeration is the same as that of the first embodiment.

When the valve element 130 is at the first stop position, a distance D5 on the valve seat surface 121 from the E port 123 at the upstream side to the most peripheral part 132a of a wall surface 132 of the flow channel 131 is larger than a distance D6 on the valve seat surface 121 from the S port 122 at the downstream side to the most peripheral part 132a of the wall surface 132 of the flow channel 131. The most peripheral part 132a of the wall surface 132 of the flow channel 131 is the outermost part of the wall surface 132 of the U-shaped flow channel 131. In Fig. 9, the distance D5 and the distance D6 shows a view along a line B-B in Fig. 8.

When the valve element 130 is at the second position not depicted, a distance D7 on the valve seat surface 121 from the C port 124 at the upstream side to the most peripheral part 132a of a wall surface 132 of the flow channel 131 is larger than a distance D8 on the valve seat surface 121 from the S port 122 at the downstream side to the most peripheral part 132a of the wall surface 132 of the flow channel 131. It is preferable that the Distance D6 and the Distance D8 become zero.

Next, a description will be made of relationship between size relation of the above-described distances D5 and D6, and the distances D7 and D8 and turbulence of the mainstream is the same as the relationship between size relation of the above-described distances D1 and D2 and turbulence of the mainstream as described in the first embodiment.

When the valve element 30 is arranged at the first stop position so that the distance D5 is larger than the distance D6, misalignment between the E port 123 at the upstream side and the most peripheral part 132a of the wall surface 132 becomes relatively large, and the flow channel 131 is spread outwardly in the vicinity of the E port 123. The turbulence is occurred in the refrigerant passing through the E port 123, however, the flow entering the mainstream of the refrigerant never occurs. Furthermore, the misalignment between the S port 122 at the downstream side and the most peripheral part 132a of the wall surface 132 become relatively small, and the refrigerant can smoothly flow along the wall surface 132. Thereby, pressure loss of the refrigerant can be suppressed. When the valve element 130 is at the second stop position, the same description can be made for the C port 124 and S port 122, and the distances D7 and D7 regarding the flow channel 131.

The second embodiment has also same effect as the first embodiment.

In the above-described first embodiment and the second embodiment, configuration using the four-way switching valve is illustrated as the present invention, however it should not be limited thereto. Insofar as it is not contrary to a purpose of the present invention, a slide valve such as six-way switching valve is applicable.

Embodiments according to the present invention are illustrated, the present invention is not limited thereto. If a person skilled in the art appropriately adds and Deletes elements, changes a design and combines features of the embodiments against the aforementioned embodiments, without beyond a scope of the present invention, such modification may be included in a scope of the present invention.

### Reference Signs List

### (First Embodiment)

1: slide valve
10: valve main body
11: wall member
12: opening
13, 14: end cover
20: valve seat
21: valve seat surface
22: S port
23: E port
24: C port
30: valve element
31: flow channel
32: wall surface
32a: most peripheral part
40: piston section
41: first piston
42: second piston
43: connecting member
45, 46: working chamber
50: pilot section
61: first conduit
62: second conduit
63: third conduit
64: fourth conduit
D1: a distance on the valve seat surface from E port to the most peripheral part of a wall surface of the flow channel when the valve element is at the first stop position
D2: a distance on the valve seat surface from S port to the most peripheral part of a wall surface of the flow channel when the valve element is at the first stop position
D3: a distance on the valve seat surface from C port to the most peripheral part of a wall surface of the flow channel when the valve element is at the second stop position
D4: a distance on the valve seat surface from S port to the most peripheral part of a wall surface of the flow channel when the valve element is at the second stop position

### (Second Embodiment)

2: slide valve
110: valve main body
120: valve seat
121: valve seat surface
122: S port
123: E port
124: C port
125: D port
130: valve element
131: U-shaped flow channel
132: wall surface
132a: most peripheral part
140: valve element driving section
161: first conduit
162: second conduit
163: third conduit
164: fourth conduit
D5: a distance on the valve seat surface from E port to the most peripheral part of a wall surface of the flow channel when the valve element is at the first stop position
D6: a distance on the valve seat surface from S port to the most peripheral part of a wall surface of the flow channel when the valve element is at the first stop position
D7: a distance on the valve seat surface from C port to the most peripheral part of a wall surface of the flow channel when the valve element is at the second stop position
D8: a distance on the valve seat surface from S port to the most peripheral part of a wall surface of the flow channel when the valve element is at the second stop position

## Claims

1. A slide valve (1) comprising:
a valve seat (20) having a valve seat surface (21) provided with a plurality of ports (22,23,24), and
a valve element (30) slidably provided on said valve seat surface; and said valve element configuring a U-shaped flow channel (31) for allowing two ports of said plurality of ports to communicate each other according to a stop position, **characterized in that**, at said stop position, a distance on said valve seat surface from a port at the upstream side of said two ports to the most peripheral part of a wall surface of said flow channel is larger than a distance on said valve seat surface from the port at the downstream side of said two ports to the most peripheral part of the wall surface of said flow channel.

2. The slide valve according to claim 1, **characterized in that** said valve element is arranged so that a distance on said valve seat surface from the port at the downstream side of said two ports to the most peripheral part of the wall surface of said flow channel becomes zero at said stop position.
